# EUROPEAN PATENT SPECIFICATION

(11) **EP 3 894 350 B1**
(45) Date of publication and mention of the grant of the patent: **05.06.2024**
(21) Application number: 19896686.3
(22) Date of filing: 13.12.2019
(51) Int. Cl.: B66F 9/12, B66F 17/00, G01G 19/08, B66F 9/075

(54) **TELESCOPING/WEIGHING FORK COMBINATION**
KOMBINATION AUS TELESKOPISCHER/WIEGEGABEL
COMBINAISON DE FOURCHE TÉLESCOPIQUE/PESEUSE

(30) Priority: 14.12.2018 US 201862779931 P
(43) Date of publication of application: 20.10.2021
(60) Divisional application: 24158667.6
(73) Proprietor: Cascade Corporation, Fairview, OR 97024-9718 (US)
(72) Inventor: LYDA, Stephen, Portland, OR 97230 (US)
(74) Representative: Laine IP Oy
(86) International application number: PCT/US2019/066375
(87) International publication number: WO 2020/124031

(56) References cited:
- EP-A2- 0 050 714
- WO-A1-2019/112427
- GB-A- 2 313 590
- NL-B1- 2 018 218
- NL-C2- 1 027 167
- US-A- 4 395 190
- US-A1- 2007 041 820
- US-A1- 2011 266 094
- US-A1- 2014 374 193

## Description

### CROSS-REFERENCE TO RELATED APPLICATIONS

This application claims priority to and the benefit of US Provisional Patent Application No. 62/779,931, filed December 14, 2018.

### BACKGROUND OF THE INVENTION

EP 0050714 A2 discloses a load indicator comprising measuring cells arranged between a fork and a U-shaped outer shoe of a fork lifter. NL 2 018 218 B1 discloses a telescoping weigh fork unit comprising a fork having a base fork having an integrated hydraulic cylinder and further comprising an outside telescopic fork shoe to which the load cells are mounted.

### BRIEF SUMMARY OF THE INVENTION

Disclosed is a mobile weighing solution in a telescopic forks unit which utilize technology for weighing forks, telescoping forks, and weighing sleeves, for application with a crown designed turret head narrow aisle truck with a limited stroke telescopic fork. This solution offers cost efficiencies, by utilizing as few parts as possible, while still providing the desired results.

According to the invention, a telescoping weigh fork unit comprises a fork having a base fork with an integrated hydraulic cylinder and an outer shoe slidably parallel to the base fork, at least two load cells supported by the outer shoe, where the outer shoe has a load surface and is configured to permit contact between a subject load and the outer shoe. The telescoping weigh fork unit further comprises an outside telescopic fork shoe to which the load cells are mounted and which supports the outer shoe.

In one embodiment, the solution may use standard telescopic forks base fork, rods, pistons and seals; specialize shoe to support load cells; and a bridge plate to support load on load cells. Preferably, the exterior dimensions would not exceed 175mm x 75mm.

An embodiment may use existing weigh forks display or provide a custom display adaptation. The display may be capable of wirelessly receiving signal from sensors. The solution may be battery operated with hardwired option. Preferably the solution would be cable of communication with off-the-shelf computer, tablet or phone. Optionally, the load cells provide a subject load weight, which subject load weight is adjusted by a telescoping factor, which factor is dependent on a telescoping distance, a telescoping time, and hydraulic displacement measured at two or more points in time. a telescoping distance, a telescoping time, and hydraulic displacement measured at two or more points in time.

The foregoing and other objectives, features, and advantages of the invention will be more readily understood upon consideration of the following detailed description of the invention taken in conjunction with the accompanying drawings.

### BRIEF DESCRIPTION OF THE SEVERAL VIEWS OF THE DRAWINGS

Fig. 1 is a perspective view of a weighing telescoping fork unit in a retracted position.
Fig. 2 is an exploded view of a weighing telescoping fork unit.

### DETAILED DESCRIPTION OF THE INVENTION

Fork arm extensions are used as an economic means of extending the effective blade length of fork arms on fork-lift trucks. They are available with either a closed rectangular cross-section or an open inverted-channel cross-section.

Telescopic fork arms replace standard fork arms and provide the truck operator with the means of adjusting the fork arm blade length. They are available either as simple variable length fork arms for handling loads of varying dimensions or, alternatively, for reaching out or retracting palletized loads in double-deep stacking and destacking operations.

It is desirable to provide an integrated solution of weighing loads, both to ensure operation within the limits of a fork truck and to more easily comply with import and customs regulations. Further, it is desirable to integrate the efficiencies of telescoping forks with weighing solutions, and to provide a seamless interface between position data and weighing data to the user.

As described herein, this weighing solution for telescopic forks utilizes technology for weighing forks, telescoping forks, and weighing sleeves, for application with a crown designed turret head narrow aisle truck with a limited stroke telescopic fork. This solution offers cost efficiencies, by utilizing as few parts as possible, while still providing the desired results.

As such, in one embodiment, the solution may use standard telescopic forks base fork, rods, pistons and seals; specialize shoe to support load cells; and a bridge plate to support load on load cells. Preferably, the exterior dimensions would not exceed 175mm x 75mm.

An embodiment may use existing weigh forks display or provide a custom display adaptation. The display may be capable of wirelessly receiving signal from sensors. The solution may be battery operated with hardwired option. Preferably the solution would be cable of communication with off-the-shelf computer, tablet or phone.

As used herein, "parent fork arm" refers to a fork arm having the rated capacity at the rated load center distance, blade length and blade cross-section for which a fork-arm extension is specifically designed.

The rated capacity (CE) and rated load center distance (DE) for each fork-arm extension shall be proportional to the rated capacity (C) and rated load center distance (D) for the parent fork arm, i.e.: C_{E} ≤ [C * D] / D_{E}.

In one embodiment, the blade length I of the parent fork arm for open-section and closed-section fork-arm extensions shall conform to the following formula: l ≥ 750 mm, l ≥ 0.6 l₁, where l₁ is the blade length of the fork arm extension.

The weigh fork includes at least two load cells supported on an outer shoe, where the load to be picked up and weighed only contacts the outer shoe. The outer shoe must only contact the load cells otherwise inaccurate measurements will be made. Telescopic forks have a cylinder built into the base fork and an outer shoe that slides along the length of the fork to change fork length hydraulically.

The load cells are mounted to the outside of a telescopic fork shoe, which then supports a secondary shoe for weighing loads, while the base fork has integrated hydraulic cylinder, and inner shoe slides longitudinally and supports external load cells, and the outer shoe is the surface used for picking up loads and weighing them.

In another embodiment, a safety module is installed on the display to alert a user to adverse conditions, such as that weighing is counter-indicated because forks are telescoped too far; that a weigh load is above load conditions for a fork truck; that at least one of a pair of load cells is inoperable due to mechanical or electrical failure such that inaccurate data would result.

In another embodiment, data from the load cells is adjusted by a telescoping factor which is dependent on extension or retraction distance, time, or hydraulic displacement measured at two or more points in time.

In one embodiment, an interface is provided with TFT / Color Display and with Software / Firmware capable of working with several daisy chained sensors. This may be accomplished in part via an intelligent junction box with blue tooth capability.

Missing in the art of telescoping forks and weighing forks is a good combination of both technologies that is integrated into a fork truck display system, is lower cost to produce, and integrates into the fork truck safety features.

The present system will permit a user to not over extend and damage the next pallet or under extend topple off and will facilitate loading primarily from one side of a load while minimizing repositioning of the fork truck. This will allow a user to use one set of forks to pick up both very long pallets and very short pallets.

The present system will permit a user to use weighing both for confirming that a load is within the capacity of a fork truck and also for legal purposes such as customs and billing.

The specifications of the present system will match the user's system by type of truck, size of fork, and hydraulic attachment specifications for pressure and flow. In terms of the weighing information, the system may utilize integrating that a fork truck display or a separate display module. The display module will have the ability to communicate with other devices, so display module can communicate with other displays or computers.

The integration of the weighing feature with the telescoping forks involves including load cells with base forks which support an outer shoe. The outer shoe contacts the loads to be pick up and weighed, and must be the only contact the load cells, otherwise inaccurate measurements will be made. The outer shoe has to be isolated, so anything that touches that outer shoe is going to be weighed or affect the weighing, so it needs to be isolated to contact only the load itself.

Rather than mounting the load cell on to the base fork, the present disclosure envisions mounting a telescoping shoe to the base fork and have another, outer shoe on top of it, such that there are a couple layers of on the fork, limited in that the outer shoe only touches the load cells.

The outer shoe is capable of telescoping. In one embodiment, the system will only weigh a load when the forks retracted to promote accuracy or have less than 3 degrees of deflection. In a telescoped configuration, the system could only weigh with an adjustment to account for deflection along the telescoped of forks. The system may optionally include a feature which disables weighing in a telescoped configuration.

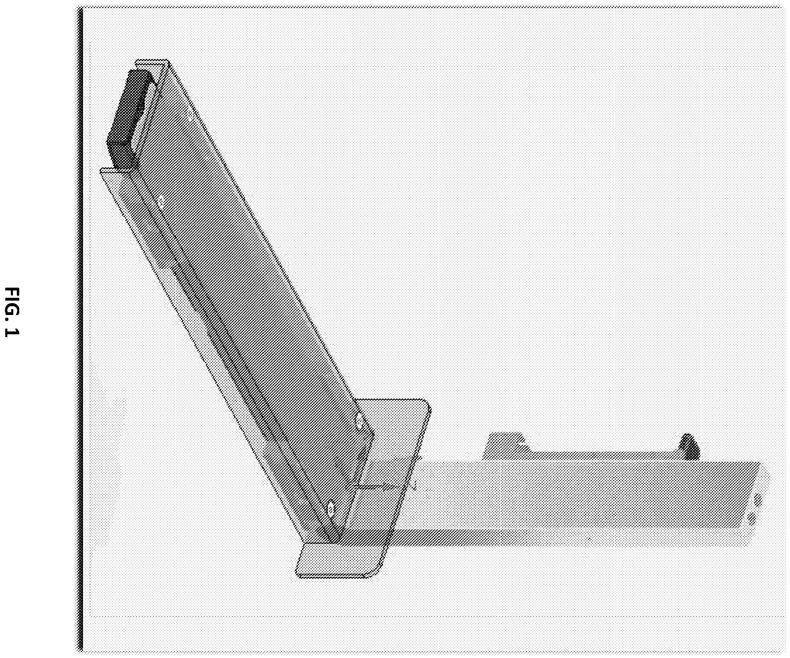

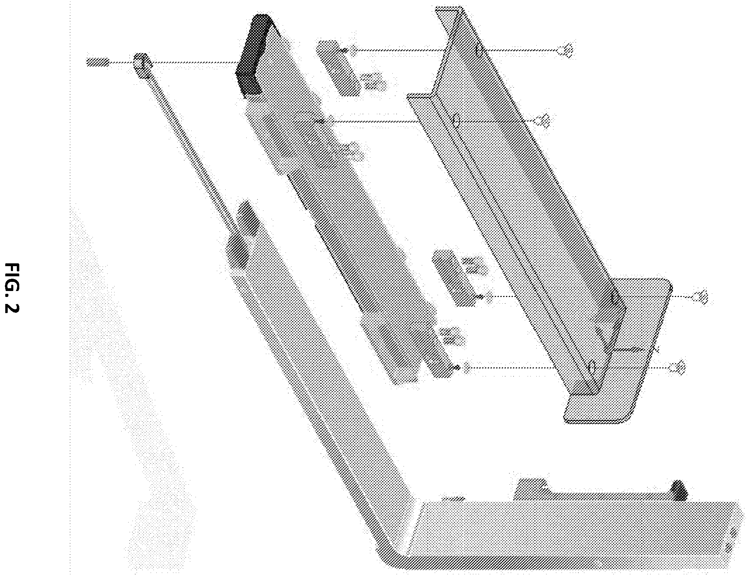

Fig. 1 illustrates the telescoping weigh fork unit (100) comprising a fork (110) having a base fork (120) having an integrated hydraulic cylinder (130) and an outer shoe (140) slidably parallel to the base fork, at least two load cells (150) supported by the outer shoe, where the outer shoe has a load surface (160) and is configured to permit contact between a subject load (not shown) and the outer shoe. Fig. 2 shows an outside telescopic fork shoe (170) to which the load cells are mounted and which supports the outer shoe. Optionally, the load cells provide a subject load weight, which subject load weight is adjusted by a telescoping factor, which factor is dependent on a telescoping distance, a telescoping time, and hydraulic displacement measured at two or more points in time.

Disclosed herein is a display (not shown) and a safety module (not shown) which work with the telescoping weigh fork unit to improve safe operation by monitoring distance of telescoping, alerting on the display if distance of telescoping exceeds a threshold distance, weighing a subject load, alerting on the display if a subject load weight exceeds a threshold weight, and alerting on the display if a load cells is inoperable. Alternatively, in lieu of a display of alert conditions, the safety module could work with operate an audible alarm if thresholds are exceeded or a weigh cell is inoperable.

The weighing cells supported by the outer shoe will operatively work with telescoping forks which have a cylinder built into the base fork, and an outer shoe that slides along the length of the fork to change the fork lengths hydraulically. The load cell may be a separate clamp module capable of being mounted the outside of the telescoping fork shoe in a position lateral to the direction of the telescoping motion, so the load cells will be on the outside and be within the thickness of the fork, while remaining in compliance with current ISO regulations, including ISO 13284, or any updates thereto.

The load cells would be on either side of the fork though, usually presented in pairs of two on each fork, such as four on each fork total, two in back, two in the front.

The terms and expressions which have been employed in the foregoing specification are used therein as terms of description and not of limitation, and there is no intention in the use of such terms and expressions of excluding equivalents of the features shown and described or portions thereof, it being recognized that the scope of the invention is defined and limited only by the appended claims.

## Claims

1. A telescoping weigh fork unit comprising a fork having a base fork having an integrated hydraulic cylinder and an outer shoe slidably parallel to the base fork, at least two load cells supported by the outer shoe, where the outer shoe has a load surface and is configured to permit contact between a subject load and the outer shoe, which telescoping weigh fork unit further comprises an outside telescopic fork shoe to which the load cells are mounted and which supports the outer shoe.

2. The unit of Claim 1, where the load cells provide a subject load weight, which subject load weight is adjusted by a telescoping factor, which factor is dependent on a telescoping distance, a telescoping time, and hydraulic displacement measured at two or more points in time.

3. The unit of Claim 1, further comprising a display and a safety module which improves safe operation by monitoring distance of telescoping, alerting on the display if distance of telescoping exceeds a threshold distance, weighing a subject load, alerting on the display if a subject load weight exceeds a threshold weight, and alerting on the display if a load cells is inoperable.

## Patentansprüche

1. Teleskopierbare Wiegegabeleinheit, umfassend eine Gabel, aufweisend eine Basisgabel, die einen integrierten Hydraulikzylinder aufweist, und einen parallel zur Basisgabel verschiebbaren Außenschuh, mindestens zwei von dem Außenschuh getragene Lastzellen, wobei der Außenschuh eine Lastfläche aufweist und konfiguriert ist, um Kontakt zwischen einer Subjektlast und dem Außenschuh zu ermöglichen, wobei die teleskopierbare Wiegegabeleinheit weiter einen äußeren Teleskopgabelschuh umfasst, an dem die Lastzellen montiert sind und der den Außenschuh trägt.

2. Einheit nach Anspruch 1, wobei die Lastzellen ein Gewicht der Subjektlast liefern, wobei das Gewicht der Subjektlast durch einen Teleskopierfaktor angepasst wird, wobei dieser Faktor von einem Teleskopierabstand, einer Teleskopierzeit und hydraulischer Verschiebung abhängig ist, die zu zwei oder mehr Zeitpunkten gemessen werden.

3. Einheit nach Anspruch 1, weiter umfassend eine Anzeige und ein Sicherheitsmodul, das sicheren Betrieb verbessert, indem es den Teleskopierabstand überwacht, auf der Anzeige eine Warnung ausgibt, wenn der Teleskopierabstand einen Schwellenwert überschreitet, eine Subjektlast wiegt, auf der Anzeige eine Warnung ausgibt, wenn ein Gewicht der Subjektlast ein Schwellengewicht überschreitet, und auf der Anzeige eine Warnung ausgibt, wenn eine Lastzelle nicht funktionsfähig ist.

## Revendications

1. Unité fourche de pesage télescopique comprenant une fourche présentant une fourche de base présentant un vérin hydraulique intégré et un sabot externe coulissant parallèle à la fourche de base, au moins deux cellules de charge supportées par le sabot externe, où le sabot externe présente une surface de charge et est configuré pour permettre un contact entre une charge en question et le sabot externe, laquelle unité fourche de pesage télescopique comprend en outre un sabot de fourche télescopique extérieur sur lequel sont montées les cellules de charge et qui supporte le sabot externe.

2. Unité selon la revendication 1, dans laquelle les cellules de charge fournissent un poids de charge en question, lequel poids de charge en question est ajusté par un facteur de télescopage, lequel facteur dépend d'une distance de télescopage, d'un temps de télescopage et d'un déplacement hydraulique mesuré à deux points ou plus dans le temps.

3. Unité selon la revendication 1, comprenant en outre un affichage et un module de sécurité qui améliore le fonctionnement sûr en surveillant la distance de télescopage, en émettant une alerte sur l'affichage si la distance de télescopage dépasse une distance seuil, en pesant une charge en question, en émettant une alerte sur l'affichage si le poids d'une charge en question dépasse un poids seuil et en émettant une alerte sur l'affichage si une cellule de charge est inutilisable.
